(19) Europäisches Patentamt / European Patent Office / Office européen des brevets

(11) **EP 3 849 942 B1**

(12) **EUROPÄISCHE PATENTSCHRIFT**

(45) Veröffentlichungstag und Bekanntmachung des Hinweises auf die Patenterteilung:
**07.02.2024  Patentblatt 2024/06**

(21) Anmeldenummer: **18833021.1**

(22) Anmeldetag: **18.12.2018**

(51) Internationale Patentklassifikation (IPC):
**C01B 33/107** (2006.01)

(52) Gemeinsame Patentklassifikation (CPC):
**C01B 33/107; C01B 33/1071**

(86) Internationale Anmeldenummer:
**PCT/EP2018/085601**

(87) Internationale Veröffentlichungsnummer:
**WO 2020/125955 (25.06.2020 Gazette 2020/26)**

(54) **VERFAHREN ZUR HERSTELLUNG VON CHLORSILANEN**

PROCESS FOR PREPARING CHLOROSILANES

PROCÉDÉ DE PRÉPARATION DE CHLOROSILANES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.07.2021  Patentblatt 2021/29**

(73) Patentinhaber: **Wacker Chemie AG**
**81737 München (DE)**

(72) Erfinder: **RIMBÖCK, Karl-Heinz**
**84431 Heldenstein (DE)**

(74) Vertreter: **Belz, Ferdinand et al**
**Wacker Chemie AG**
**Hanns-Seidel-Platz 4**
**81737 München (DE)**

(56) Entgegenhaltungen:
WO-A2-02/48024    DE-A1- 3 938 897
DE-A1- 19 740 923    DE-A1-102008 041 974

**Beschreibung**

Die Erfindung betrifft Verfahren zur Herstellung von Chlorsilanen in einem Wirbelschichtreaktor durch Umsetzung von einem Wasserstoff und Siliciumtetrachlorid enthaltenden Reaktionsgas mit einer partikulären Kontaktmasse, enthaltend Silicium und einen Katalysator, wobei die Chlorsilane die allgemeinen Formel $H_nSiCl_{4-n}$ und/oder $H_mCl_{6-m}Si_2$ mit n = 1 bis 4 und m = 0 bis 4 aufweisen, dadurch gekennzeichnet, dass das Reaktordesign durch eine Kennzahl K1, die Beschaffenheit der Kontaktmasse durch eine Kennzahl K2 und die Reaktionsbedingungen durch eine Kennzahl K3 beschrieben sind, wobei K1 einen Wert von 2 bis 20, K2 einen Wert von 0,001 bis 200 und K3 einen Wert von 0,5 bis 10.000 aufweist.

Die Herstellung von polykristallinem Silicium als Ausgangsmaterial für die Fertigung von Chips oder Solarzellen erfolgt üblicherweise durch Zersetzung seiner flüchtigen Halogenverbindungen, insbesondere Trichlorsilan (TCS, $HSiCl_3$).

Polykristallines Silicium (Polysilicium) kann mittels des Siemens-Prozesses in Form von Stäben erzeugt werden, wobei Polysilicium in einem Reaktor an erhitzten Filamentstäben abgeschieden wird. Als Prozessgas wird üblicherweise ein Gemisch aus TCS und Wasserstoff eingesetzt. Alternativ kann Polysilicium-Granulat in einem Wirbelschichtreaktor hergestellt werden. Dabei werden Siliciumpartikel mittels einer Gasströmung in einer Wirbelschicht fluidisiert, wobei diese über eine Heizvorrichtung auf hohe Temperaturen aufgeheizt wird. Durch Zugabe eines siliciumhaltigen Reaktionsgases wie TCS erfolgt eine Pyrolysereaktion an der heißen Partikeloberfläche, wodurch die Partikel in ihrem Durchmesser wachsen.

Die Herstellung von Chlorsilanen, insbesondere TCS, kann im Wesentlichen durch drei Verfahren erfolgen, denen folgende Reaktionen zugrunde liegen (vgl. WO2010/028878A1 und WO2016/198264A1) :

(1) $Si + 3HCl \longrightarrow SiHCl_3 + H_2$ + Nebenprodukte
(2) $Si + 3SiCl_4 + 2H_2 \longrightarrow 4SiHCl_3$ + Nebenprodukte
(3) $SiCl_4 + H_2 \longrightarrow SiHCl_3 + HCl$ + Nebenprodukte

Als Nebenprodukte können weitere Halogensilane anfallen, beispielsweise Monochlorsilan ($H_3SiCl$), Dichlorsilan ($H_2SiCl_2$), Siliciumtetrachlorid (STC, $SiCl_4$) sowie Di- und Oligosilane. Ferner können Verunreinigungen wie Kohlenwasserstoffe, Organochlorsilane und Metallchloride Bestandteil der Nebenprodukte sein. Um hochreines TCS zu erzeugen, erfolgt daher anschließend üblicherweise eine Destillation.

Bei der Hydrochlorierung (HC) gemäß Reaktion (1) können aus metallurgischem Silicium ($Si_{mg}$) unter Zusatz von Chlorwasserstoff (HCl) Chlorsilane in einem Wirbelschichtreaktor hergestellt werden, wobei die Reaktion exotherm verläuft. Dabei erhält man in der Regel TCS und STC als Hauptprodukte.

Eine weitere Möglichkeit zur Herstellung von Chlorsilanen, insbesondere TCS, ist die thermische Konvertierung von STC und Wasserstoff in der Gasphase in Gegenwart oder Abwesenheit eines Katalysators.

Die Niedertemperaturkonvertierung (NTK) gemäß Reaktion (2) ist ein schwach endothermer Prozess und wird üblicherweise in Gegenwart eines Katalysators (z.B. kupferhaltige Katalysatoren oder Katalysatormischungen) durchgeführt. Die NTK kann in einem Wirbelschichtreaktor in Anwesenheit von $Si_{mg}$ unter einem Druck von 0,5 bis 5 MPa und bei Temperaturen von 400 bis 700°C erfolgen. Eine unkatalysierte Reaktionsführung ist generell unter Verwendung von $Si_{mg}$ und/oder durch Zusetzen von HCl zum Reaktionsgas möglich. Allerdings können sich andere Produktverteilungen ergeben und/oder niedrigere TCS-Selektivitäten erzielt werden als bei der katalysierten Variante.

Die Hochtemperaturkonvertierung (HTK) gemäß Reaktion (3) ist ein endothermer Prozess. Dieses Verfahren findet üblicherweise in einem Reaktor unter hohem Druck bei Temperaturen zwischen 600 und 1.200°C statt.

Grundsätzlich sind die bekannten Verfahren aufwendig und energieintensiv. Die erforderliche Energiezufuhr, die in der Regel elektrisch erfolgt, stellt einen erheblichen Kostenfaktor dar. Die operative Performance (bspw. ausgedrückt durch die TCS-selektivitätsgewichtete Produktivität, die Entstehung wenig hochsiedender Nebenprodukte) der NTK im Wirbelschichtreaktor hängt entscheidend von den einstellbaren Reaktionsparametern ab. Ferner ist es für eine kontinuierliche Prozessführung erforderlich, die Eduktkomponenten Silicium, STC und Wasserstoff unter den Reaktionsbedingungen in den Reaktor einzubringen, was mit einem erheblichen technischen Aufwand verbunden ist. Vor diesem Hintergrund ist es wichtig, eine möglichst hohe Produktivität - Menge an gebildeten Chlorsilanen pro Zeiteinheit und Reaktionsvolumen - und eine möglichst hohe Selektivität bezogen auf das gewünschte Zielprodukt (üblicherweise TCS) zu realisieren (TCS-selektivitätsgewichtete Produktivität).

Die Herstellung von Chlorsilanen durch NTK ist ein dynamischer Prozess. Für eine möglichst effiziente Durchführung und eine stetige Optimierung der HC ist es nötig, die zugrundeliegenden Dynamiken zu verstehen und sichtbar zu machen. Dafür sind grundsätzlich zeitlich hochaufgelöste Methoden zum ProzessMonitoring notwendig.

Es ist bekannt, die Zusammensetzung in einer Produktmischung der NTK mit hohem Personalaufwand im Labor durch Analyse von entnommenen Proben zu bestimmen (off-/at-line Messung). Diese findet jedoch immer zeitverzögert statt und liefert damit im besten Fall einen punktuellen, retrospektiven Ausschnitt eines diskreten Betriebszustandes eines Wirbelschichtreaktors. Werden aber zum Beispiel Produktgasströme mehrerer Reaktoren auf eine Kondensationsstrecke geleitet und wird lediglich eine Probe dieser Kondensatmischung entnommen, lassen sich auf Basis des Analyseergebnisses keine konkreten Rückschlüsse auf die Betriebszustände der einzelnen Reaktoren ziehen.

WO 02/48024 A2 beschreibt ein NTK-Verfahren zur Herstellung von Chlorsilanen, das durch ein Verhältnis aus den Verweilzeiten von HCl und Siliciumtetrachlorid gesteuert wird.

DE 39 38 897 Al beschreibt ein NTK-Verfahren zur Herstellung von TCS durch Umsetzung von Siliciumpulver mit HCl in einem Wirbelschichtreaktor bei 280 bis 300°C.

DE 10 2008 041 974 A1 beschreibt ein energieautarkes NTK-Verfahren zur Herstellung von Chlorsilanen, wobei die Umsetzung von Silicium, Siliciumtetrachlorid und $H_2$ bei einem Druck von 25 bis 55 bar und einer Temperatur von 450 bis 650°C erfolgt.

DE 197 40 923 A1 beschreibt ein HC-Verfahren zur Herstellung von STC durch Umsetzung von Silicium mit HCl, wobei das Silicium vor oder während der HC-Reaktion mit einer Silanverbindung kontaktiert wird.

Um in höherer zeitlicher Auflösung die Zusammensetzung einer Produktmischung der NTK messen zu können (bevorzugt an jedem einzelnen Reaktor), können Prozessanalysatoren im Gas- und/oder Kondensatstrom, beispielsweise Prozessgaschromatograph, angewandt werden (on-/in-line und/oder nicht-invasive Messung). Grundsätzlich nachteilig hierbei ist die beschränkte Anzahl einsetzbarer Geräte, aufgrund der hohen mechanischen Beanspruchung (Abrasion) und der aggressiven chemischen Umgebung. Ein weiterer Kostenfaktor sind die generell hohen Beschaffungs- und Wartungskosten.

Um diskrete Betriebszustände von NTK-Reaktoren zu identifizieren, kann grundsätzlich auf verschiedene prozessanalytische Methoden zurückgegriffen werden, die wie folgt kategorisiert werden können (W.-D. Hergeth, On-Line Monitoring of Chemical Reactions: Ullmann's Encyclopedia of Industrial Chemistry, Wiley: Weinheim, Germany 2006).

| Kategorie | Probennahme | Probentransport | Analyse |
|---|---|---|---|
| off-line | manuell | zu entferntem Labor | automatisiert/ manuell |
| at-line | diskontinuierlich manuell | zu Analysegerät vor Ort | automatisiert/ manuell |
| on-line | automatisiert | integriert | automatisiert |
| in-line | integriert | kein Transport | automatisiert |
| noninvasiv | kein Kontakt | kein Transport | automatisiert |

Die Nachteile von Prozessanalysatoren können durch eine modellbasierte Methodik auf Basis sogenannter Softsensoren (virtuelle Sensoren) umgangen werden. Softsensoren greifen auf kontinuierlich bestimmte Messdaten von Betriebsparametern zurück, die zum Betreiben des Prozesses essenziell sind (z.B. Temperaturen, Drücke, Volumenströme, Füllstände, Leistungen, Massenströme, Ventilstellungen, etc.). So lassen sich beispielsweise Konzentrationen an Haupt- und Nebenprodukten vorhersagen.

Softsensoren basieren auf mathematischen Gleichungen und sind Abhängigkeitssimulationen von stellvertretenden Messgrößen zu einer Zielgröße. Mit anderen Worten, Softsensoren bilden Abhängigkeiten von korrelierenden Messgrößen ab und führen zu einem Zielparameter. Der Zielparameter wird also nicht direkt gemessen, sondern anhand von mit diesem korrelierenden Messgrößen bestimmt. Übertragen auf die HC bedeutet dies, dass beispielsweise der TCS-Gehalt oder die TCS-Selektivität nicht mit realen Messsensoren (z.B. Prozessgaschromatograph) bestimmt werden, sondern über Zusammenhänge zwischen Betriebsparametern berechnet werden kann.

Die Erstellung mathematischer Gleichungen für Softsensoren kann durch vollempirische (z.B. basierend auf einem abgewandelten Power-Law-Modell), durch teilempirische (z.B. basierend auf kinetischen Gleichungen zur Beschreibung einer Reaktionsgeschwindigkeit) oder durch fundamentale (z.B. basierend auf Grundgleichungen der Strömungsmechanik und Kinetik) Modellierung erfolgen. Die mathematischen Gleichungen können mit Hilfe von Prozesssimulationsprogrammen (z.B. OpenFOAM, ANSYS oder Barracuda) oder Regressionsprogrammen (z.B. Excel VBA, MATLAB oder Maple) abgeleitet werden.

Die Aufgabe der vorliegenden Erfindung bestand darin, die Wirtschaftlichkeit der Herstellung von Chlorsilanen mittels NTK zu verbessern.

Diese Aufgabe wird gelöst durch ein Verfahren zur Herstellung von Chlorsilanen in einem Wirbelschichtreaktor durch Umsetzung von einem Wasserstoff und Siliciumtetrachlorid enthaltenden Reaktionsgas mit einer partikulären Kontaktmasse, enthaltend Silicium und einen Katalysator, wobei die Chlorsilane die allgemeinen Formel $H_nSiCl_{4-n}$ und/oder $H_mCl_{6-m}Si_2$ mit n = 1 bis 4 und m = 0 bis 4 aufweisen.

Das Reaktordesign wird dabei beschrieben durch eine dimensionslose Kennzahl K1, wobei

$$K1 = \varphi \cdot \frac{V_{Reaktor,eff}}{A_{ges,gek\ddot{u}hlt} \cdot d_{hyd}}, \quad \text{mit} \qquad \text{(Gleichung 1)}$$

$\varphi$ = Füllgrad des Reaktors,
$V_{Reaxtor,eff}$ = effektives Volumen des Reaktorinnenraums [m³],
$A_{ges,gek\ddot{u}hlt}$ = Summe gekühlter Oberflächen im Reaktor [m²] und
$d_{hyd}$ = hydraulischer Reaktordurchmesser[m].

Die Beschaffenheit der Kontaktmasse wird beschrieben durch eine dimensionslose Kennzahl K2, wobei

$$K2 = R_{Si} \cdot \frac{B_{AK} \cdot \delta_{rel}}{d_{32}}, \quad \text{mit} \qquad \text{(Gleichung 4)}$$

$B_{AK}$ = Breite der Partikelgrößenverteilung der Kontaktmasse [pm],
$d_{32}$ = Partikel-Sauterdurchmesser [pm],
$R_{Si}$ = Reinheitsgrad des Siliciums (0,75 bis 0,99999) und
$\delta_{rel}$ = relative Katalysatorverteilung in der Kontaktmasse.

Die Reaktionsbedingungen sind beschrieben durch eine dimensionslose Kennzahl K3, wobei

$$K3 = \frac{u_L}{v_F \cdot 10^6} \cdot \frac{p_{diff}}{g} \cdot \frac{1}{\rho_F}, \quad \text{mit} \qquad \text{(Gleichung 7)}$$

$u_L$ = Gaslehrrohrgeschwindigkeit [m/s],
$v_F$ = kinematische Viskosität des Fluids (gasförmiges Reaktionsgemisch im Reaktorinnenraum) [m²/s],
$\rho_F$ = Fluiddichte [kg/m³],
$p_{diff}$ = Druckverlust über die Wirbelschicht [kg/m*s²] und
$g$ = Erdbeschleunigung [m/s²].

K1 wird bei dem Verfahren ein Wert von 2 bis 20, K2 ein Wert von 0,001 bis 200 und K3 ein Wert von 0,5 bis 10.000 vorgegeben. Innerhalb dieser Bereiche ist die Produktivität des Verfahrens besonders hoch.

Durch den Einsatz von physischen und virtuellen Methoden zum Prozessmonitoring konnten neue Zusammenhänge bei der NTK identifiziert werden, die es ermöglichen, die NTK durch die drei Kennzahlen K1, K2 und K3 so zu beschreiben, dass sich das Verfahren durch Wahl bestimmter Parametereinstellungen und Kombinationen daraus besonders wirtschaftlich betreiben lässt. Das erfindungsgemäße Verfahren ermöglicht eine integrierte, prädiktive Prozesssteuerung im Sinne einer "Advanced Process Control (APC)" für die NTK. Wird die NTK, insbesondere durch Prozessregelungssysteme (bevorzugt APC-Regler), in den erfindungsgemäßen Bereichen für K1, K2 und K3 durchgeführt, ergibt sich eine größtmögliche wirtschaftliche Effizienz. In einem Verbund zur Herstellung von Siliciumprodukten (z.B. Polysilicium verschiedener Qualitätsstufen) kann durch Einbindung des Verfahrens der Produktionsablauf optimiert und Herstellungskosten gesenkt werden.

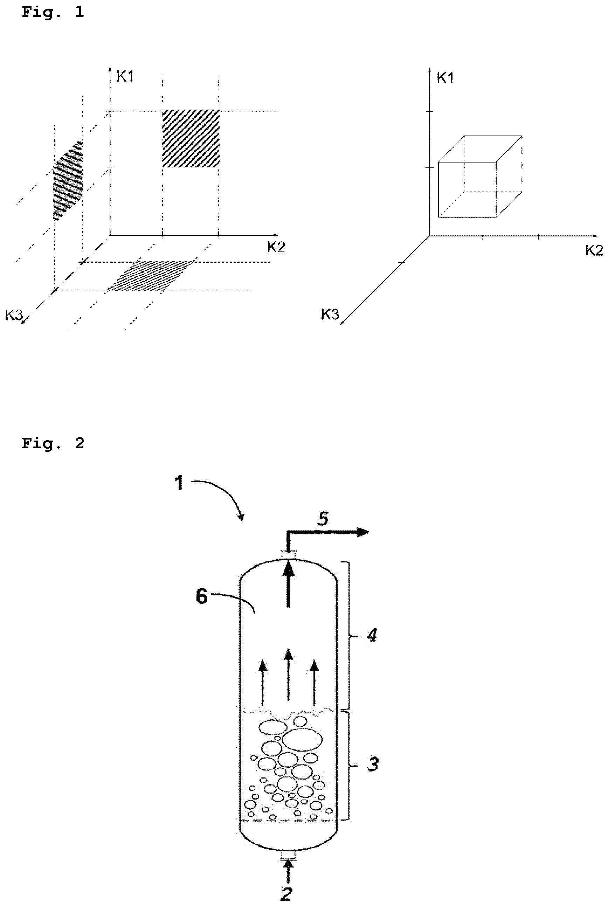

Die Bereiche für die Kennzahlen K1, K2 und K3 spannen, eingetragen in ein kartesisches Koordinatensystem, einen dreidimensionalen Raum auf, der einen besonders wirtschaftlichen Betriebsbereich für die NTK darstellt. In der Figur 1 ist ein solcher Betriebsbereich schematisch dargestellt. Insbesondere wird durch das erfindungsgemäße Verfahren auch die Auslegung neuer Wirbelschichtreaktoren für die NTK erheblich vereinfacht.

Durch Softsensoren können zudem Performance-Parameter wie bspw. die TCS-Selektivität als Funktion von K1, K2 und K3 abgebildet werden. Die dadurch in hoher zeitlicher Auflösung ermittelten Performance-Daten können als zu regelnde Größe an eine Prozessregelung, insbesondere modellprädiktive Regelung, weitergegeben werden. Auf diese Weise kann der Prozess wirtschaftlich optimiert betrieben werden.

Gemäß einer bevorzugten Ausführung des Verfahrens weist K1 einen Wert von 3 bis 18, bevorzugt von 4 bis 16, besonders bevorzugt von 6 bis 12, auf.

K2 hat vorzugsweise einen Wert von 0,005 bis 100, bevorzugt von 0,01 bis 25, besonders bevorzugt von 0,02 bis 15.

K3 weist vorzugsweise einen Wert von 0,5 bis 10.000, bevorzugt von 3 bis 3.000, besonders bevorzugt von 5 bis 1.000, insbesondere bevorzugt von 10 bis 500, auf.

Die Figur 2 zeigt schematisch einen Wirbelschichtreaktor 1 mit einem Reaktorinnenraum 6 zur Durchführung des Verfahrens. Das Reaktionsgas 2 wird vorzugsweise von unten und gegebenenfalls von der Seite (z.B. tangential oder orthogonal zum Gasstrom von unten) in die partikuläre Kontaktmasse eingeblasen, wodurch die Partikel der Kontaktmasse fluidisiert werden und eine Wirbelschicht 3 bilden. In der Regel wird zum Starten der Reaktion mittels einer außerhalb des Reaktors angeordneten Heizvorrichtung (nicht dargestellt) die Wirbelschicht 3 beheizt. Während des kontinuierlichen Betriebs ist üblicherweise kein Heizen erforderlich. Ein Teil der Partikel wird mit der Gasströmung aus der Wirbelschicht 3 in den Freiraum 4 oberhalb der Wirbelschicht 3 transportiert. Der Freiraum 4 ist durch eine sehr geringe Feststoffdichte gekennzeichnet, wobei diese in Richtung Reaktoraustritt abnimmt. Der Partikelanteil, der mit der Gasströmung den Reaktor verlässt, wird als Partikelaustrag 5 bezeichnet. Ein Beispiel eines Wirbelschichtreaktors ist in der US 2011-/0129402 A1 beschrieben.

**K1 - Das Füllgrad-gewichtete Reaktordesign**

Die Kennzahl K1 setzt über die Gleichung 1 Parameter der Reaktorgeometrie, nämlich das effektive Volumen des Reaktorinnenraums $V_{Reaktor,eff}$, die Summe der gekühlten Oberflächen im Reaktorinnenraum $A_{ges,gekühlt}$ sowie den hydraulischen Durchmesser $d_{hyd}$ mit der Wirbelschicht, ausgedrückt durch den dimensionslosen Füllgrad $\varphi$, in Beziehung.

$V_{Reaktor,eff}$ entspricht dem gesamten Volumen des Reaktorinnenraums abzüglich aller Einbauten. $V_{Reaxtor,eff}$ beträgt 1 bis 300 m$^3$, bevorzugt 5 bis 200 m$^3$, besonders bevorzugt 10 bis 150 m$^3$, insbesondere 20 bis 100 m$^3$.

Untersuchungen zur Fluiddynamik in Wirbelschichtreaktoren haben ergeben, dass die Geometrie des Innenraums des Wirbelschichtreaktors maßgeblich die Fluiddynamik und damit auch die Produktivität beeinflussen kann. Unter Innenraum soll dabei insbesondere der Bereich verstanden werden, der mit dem Reaktionsgas und/oder den Partikeln der Kontaktmasse in Berührung kommen kann (also insbesondere sowohl der Freiraum als auch der Bereich, in dem sich die Wirbelschicht bildet). Die Geometrie des Innenraums wird neben allgemeinen konstruktiven Merkmalen wie Höhe, Breite, Form (z.B. Zylinder oder Konus) auch durch sich im Innenraum befindliche Einbauten bestimmt. Bei den Einbauten kann es sich insbesondere um Wärmetauschereinheiten, Versteifungsebenen, Zuführungen (Leitungen) zum Einbringen des Reaktionsgases und Vorrichtungen zur Verteilung des Reaktionsgases (z.B. Gasverteilerplatten) handeln.

Die Summe der gekühlten Oberflächen im Reaktorinnenraum $A_{ges,gekühlt}$ gibt an, wieviel Fläche zum Wärmeaustausch genutzt werden kann. Beispielsweise setzt sich $A_{ges,gekühlt}$ aus den Oberflächen eines Kühlregisters (bestehend aus einzelnen Lanzen, U-Rohren o.Ä.) sowie einer Mantelkühlung zusammen.

Der hydraulische Durchmesser $d_{hyd}$ des Wirbelschichtreaktors ist eine ingenieurtechnische Kennzahl, mit der sich strömungsmechanische Reibungs- und Oberflächeneffekte von Einbauten, Kanälen oder anderen Geometrien beschreiben lassen, indem diese auf einen äquivalenten Durchmesser zurückgeführt werden. $d_{hyd}$ berechnet sich nach Gleichung 2.

$$d_{hyd} = 4 \cdot \frac{A_{q,frei}}{U_{ges,benetzt}}, \text{ mit} \qquad (\text{Gleichung 2})$$

$A_{q,frei}$ = freier Strömungsquerschnitt im Innenraum [m$^2$] und
$U_{ges,benetzt}$ = benetzter Umfang aller Einbauten [m] .

Beim freien Strömungsquerschnitt handelt es sich um den Querschnitt des Teils des Reaktors (ohne Einbauten) in der sich die Wirbelschicht ausbildet.

Der hydraulische Anlagendurchmesser $d_{hyd}$ beträgt 0,5 bis 2,5 m, bevorzugt 0,75 bis 2 m, besonders bevorzugt 0,8 bis 1,5 m.

Die Vermessung aller Objekte (Durchmesser des Innenraums, Umfang der Einbauten, gekühlte Oberflächen) kann beispielsweise mittels Laser-Messungen/3D-Scans (z.B. ZEISS COMET L3D 2) ermittelt werden. Üblicherweise sind diese Größen auch den Angaben der Reaktorhersteller zu entnehmen.

Der Füllgrad $\varphi$ gibt an, wieviel Kontaktmasse im Reaktorinnenraum vorhanden ist. $\varphi$ berechnet sich nach Gleichung 3.

$$\varphi = 10 \cdot \frac{p_{diff}}{\rho_p \cdot g}, \text{ mit} \qquad (\text{Gleichung 3})$$

$p_{diff}$ = Druckverlust über die Wirbelschicht [kg/m*s$^2$] und
$\rho_p$ = Partikelfeststoffdichte der Kontaktmasse [kg/m$^3$].

Die Partikelfeststoffdichte $\rho_p$ kann näherungsweise als konstant angesehen werden. Ein typischer Wert ist z.B. 2336 kg/m³ (Dichte Si bei 20°C). Die Messung kann mit einem Pyknometer erfolgen.

Der Druckverlust über die Wirbelschicht $p_{diff}$ beträgt 10.000 bis 200.000 kg/m*s², bevorzugt 30.000 bis 150.000 kg/m*s², besonders bevorzugt 50.000 bis 120.000 kg/m*s². Zur Bestimmung von $p_{diff}$ wird der Druck sowohl in einer Zuleitung des Reaktionsgases als auch in einer Ableitung des Abgases beispielsweise mit einem Manometer gemessen. Aus der Differenz ergibt sich $p_{diff}$.

**K2 - Die Beschaffenheit der Kontaktmasse**

K2 beschreibt über die Gleichung 4 die Beschaffenheit, insbesondere die Körnung, der eingesetzten partikulären Kontaktmasse.

$K2$ setzt sich aus dem dimensionslosen Reinheitsgrad des Siliciums $R_{Si}$, der Breite der Partikelgrößenverteilung der Kontaktmasse $B_{AK}$, dem Sauterdurchmesser $d_{32}$ und der relativen Katalysatorverteilung in der Kontaktmasse $\delta_{rel}$ zusammen. $B_{AK}$ ergibt sich aus Gleichung 5.

$$B_{AK} = d_{90} - d_{10}, \text{ wobei} \qquad\qquad \text{(Gleichung 5)}$$

$d_{10}$ [μm] ein Maß ist für die Größe der kleineren Partikel und der Wert $d_{90}$ [μm] ein Maß ist für die größeren Partikel in der Fraktion oder Körnungsmischung. $d_{10}$ und $d_{90}$ sind generell wichtige Parameter für die Charakterisierung einer Partikelgrößenverteilung. Der Wert $d_{10}$ bedeutet beispielsweise, dass 10 % aller Partikel kleiner sind als der angegebene Wert. Der Wert von $d_{50}$ ist ferner als mittlere Partikelgröße definiert (vgl. DIN 13320).

Die Werte für $d_{10}$ sowie $d_{90}$ werden so gewählt, dass sich eine Breite der Partikelgrößenverteilung der Kontaktmasse $B_{AK}$ von 10 bis 1.500 μm, bevorzugt von 100 bis 1.000 μm, besonders bevorzugt von 300 bis 800 μm, ergibt.

Der Sauterdurchmesser $d_{32}$ entspricht dem mittleren, volumengleichen Partikeldurchmesser der Kontaktmasse und beträgt 10 bis 2.000 μm, bevorzugt 50 bis 1.500 μm, besonders bevorzugt 100 bis 1.000 μm, insbesondere 200 bis 800 μm.

Die Bestimmung der Breite der Korngrößenverteilung bzw. des Sauterdurchmessers kann nach ISO 13320 (Laserbeugung) und/oder ISO 13322 (Bildanalyse) erfolgen. Eine Berechnung von mittleren Partikelgrößen/-durchmessern aus Partikelgrößenverteilungen kann nach DIN ISO 9276-2 erfolgen.

Die relative Katalysatorverteilung in der Kontaktmasse $\delta_{rel}$ ist ein Maß für die Benetzung bzw. generelle Benetzbarkeit der partikulären Kontaktmasse mit dem Katalysator. Unter Katalysator sollen insbesondere auch Mischungen von Katalysatoren und/oder Promotoren verstanden werden, die dem Wirbelschichtreaktor zugesetzt werden können. Entsprechend kann $\delta_{rel}$ auch ein Maß für die Benetzung der partikulären Kontaktmasse mit einer Katalysatormischung oder einer Katalysator-Promotormischung sein.

$\delta_{rel}$ kann nach Gleichung 7 berechnet werden.

$$\delta_{rel} = \lambda \cdot \frac{O_{spez,Kat}}{O_{spez,SiK}}, \text{ mit} \qquad\qquad \text{(Gleichung 6)}$$

A = Massenverhältnis Katalysator/Silicium-Körnung bzw. Katalysator-Beladung,
$O_{spez,Kat}$ = mittlere spezifische Oberfläche des Katalysators [m²/kg] und
$O_{spez,SiK}$ = mittlere spezifische Oberfläche der Silicium-Körnung [m²/kg].

Die relative Katalysatorverteilung in der Kontaktmasse $\delta_{rel}$ beträgt 0,001 bis 7, bevorzugt 0,005 bis 5, besonders bevorzugt 0,01 bis 2,5.

Die mittlere spezifische Oberfläche kann z.B. mittels Gasadsorption nach dem BET-Verfahren direkt bestimmt werden (ISO 9277).

Unter "Körnung" soll insbesondere eine Mischung aus Siliciumpartikeln verstanden werden, die beispielsweise durch Zerkleinern von stückigem Silicium, insbesondre $Si_{mg}$, mittels Brech- und Mahlanlagen hergestellt werden kann. Das stückige Silicium kann eine mittlere Partikelgröße von > 10 mm, bevorzugt > 20 mm, besonders bevorzugt > 50 mm aufweisen. Die maximale mittlere Partikelgröße ist vorzugsweise 500 mm. Körnungen lassen sich im Wesentlichen durch Sieben und/oder Sichten in Fraktionen klassieren.

Körnungen können hergestellt werden durch/aus

- Brechen und Mahlen von stückigem Silicium; anschließend ggf. sieben und/oder sichten (Klassieren)

- Abfällen, insbesondere in Form von Stäuben, die bei der Bearbeitung (Brechen, Mahlen, Sägen) verschiedener Siliciumarten (Wafer, poly-/multi-/einkristallines Silicium, $Si_{mg}$) anfallen und ggf. klassiert werden; in Form von Über- und/oder Unterkorn, wobei es sich um Fraktionen handelt, die außerhalb der Zielkörnung liegen,
- Verfahren zur Herstellung von granuliertem $Si_{mg}$ oder Polysilicium und der dabei entstehende Nebenanfall, insbesondere Siliciumstäube (mittlerer Partikeldurchmesser < 10 $\mu$m, ggf. prozessiert (kompaktieren/agglomerieren), bspw. in Form von Pellets).

Eine Mischung verschiedener Körnungen kann als Körnungsmischung und die Körnungen, aus denen die Körnungsmischung besteht, als Körnungsfraktionen bezeichnet werden. Körnungsfraktionen können relativ zueinander in Grobkornfraktionen und Feinkornfraktionen eingeteilt werden. Grundsätzlich ist bei einer Körnungsmischung möglich, mehr als eine Körnungsfraktion in Grobkornfraktion und/oder Feinkornfraktion einzuteilen. Die Körnung, die in den Wirbelschichtreaktor eingebracht wird, kann als Arbeitskörnung bezeichnet werden. Bei der Kontaktmasse handelt es sich generell um die Körnungsmischung, die im Reaktor mit dem Reaktionsgas in Kontakt kommt und reagiert.

Bei der Kontaktmasse handelt es sich insbesondere um eine Körnungsmischung. Vorzugsweise umfasst die Kontaktmasse keine weiteren Komponenten. Bevorzugt handelt es sich um Silicium, das höchstens 5 Gew.-%, besonders bevorzugt höchstens 2 Gew.-%, insbesondere höchstens 1 Gew.-%, andere Elemente als Verunreinigungen enthält. Vorzugsweise handelt es sich um $Si_{mg}$, das üblicherweise eine Reinheit von 98 bis 99,9 % aufweist. Typisch ist beispielsweise eine Zusammensetzung mit 98 % Silicium, wobei sich die übrigen 2 % in der Regel zum größten Teil aus den folgenden Elementen zusammensetzen: Fe, Ca, Al, Ti, Cu, Mn, Cr, V, Ni, Mg, B, C, P und O. Ferner können folgende Elemente enthalten sein: Co, W, Mo, As, Sb, Bi, S, Se, Te, Zr, Ge, Sn, Pb, Zn, Cd, Sr, Ba, Y und Cl. Die Angabe der Reinheit von Silicium ist demnach so zu verstehen, dass in der zu messenden Siliciumprobe der Gehalt der genannten Elemente bestimmt wird und diese dann in Summe zur Berechnung des Reinheitsgrads (bspw. in Gew.-%) herangezogen werden. Wird ein gesamter Gehalt an Verunreinigungen mit 2 Gew.-% bestimmt, so ergibt sich ein Siliciumgehalt von 98 Gew.-%. Es ist allerdings auch die Verwendung von Silicium einer geringeren Reinheit von 75 bis 98 Gew.-% möglich. Vorzugsweise ist jedoch der Siliciumanteil größer als 75 Gew.-%, bevorzugt größer als 85 Gew.-%, besonders bevorzugt größer als 95 Gew.-%.

Einige der als Verunreinigung im Silicium vorliegenden Elemente weisen eine katalytische Aktivität auf. Daher kann der Zusatz eines separaten Katalysators grundsätzlich nicht erforderlich sein, wenn das eingesetzt Silicium katalytisch wirksame Verunreinigungen enthält. Allerdings kann das Verfahren durch die Gegenwart eines oder mehrerer zusätzlicher Katalysatoren weiter positiv beeinflusst werden, insbesondere hinsichtlich seiner Selektivität.

Gemäß einer Ausführungsform handelt es sich bei dem eingesetzten Silicium um eine Mischung aus $Si_{mg}$ und Reinstsilicium (Reinheit > 99,9 %). Anders ausgedrückt kann es sich um eine Körnungsmischung handeln, die $Si_{mg}$ und Reinstsilicium umfasst. Vorzugsweise beträgt dabei der Anteil an $Si_{mg}$ mindestens 50 Gew.-%, bevorzugt mindestens 70 Gew.-%, besonders bevorzugt mindestens 90 Gew.-%, bezogen auf das Gesamtgewicht der Körnungsmischung. Insbesondere ist das Reinstsilicium Bestandteil der Feinkornfraktion. Ferner kann die Feinkornfraktion ausschließlich Reinstsilicium enthalten.

Gemäß einer weiteren Ausführungsform handelt es sich bei dem eingesetzten Silicium um $Si_{mg}$ und Reinstsilicium, wobei der Anteil an $Si_{mg}$ kleiner ist als 50 Gew.-%, bezogen auf das Gesamtgewicht der Körnungsmischung. Vorzugsweise umfasst dabei die Körnungsmischung bzw. die Kontaktmasse zusätzlich einen Katalysator. Das Reinstsilicium und/oder der Katalysator sind bevorzugt Bestandteile der Feinkornfraktion. Vorzugsweise besteht die Feinkornfraktion aus Reinstsilicium.

Gemäß einer anderen Ausführungsform handelt es sich bei dem eingesetzten Silicium ausschließlich um Reinstsilicium und die Kontaktmasse bzw. Körnungsmischung enthält einen Katalysator.

Grundsätzlich lässt sich Reinstsilicium bereits unter Anwesenheit geringer Mengen eines der Elemente Co, Mo und W (in der Regel bereits als Verunreinigung in Reinstsilicium enthalten) durch NTK umsetzen. Eine gemeinsame Umsetzung mit $Si_{mg}$, welches größere Mengen der katalytisch aktiven Elemente als Verunreinigung enthält, ist nicht zwingend erforderlich. Allerdings kann durch Zusatz eines Katalysators die Chlorsilanselektivität noch erhöht werden. Bei dem vorliegenden Verfahren kann dies insbesondere dann der Fall sein, wenn der Anteil an Reinstsilicium in der Körnungsmischung größer ist als der Anteil an $Si_{mg}$ und/oder wenn die Körnungsmischung ausschließlich Reinstsilicium umfasst.

Bei dem Katalysator kann es sich um ein oder mehrere Elemente aus der Gruppe mit Fe, Cr, Ni, Co, Mn, W, Mo, V, P, As, Sb, Bi, O, S, Se, Te, Ti, Zr, C, Ge, Sn, Pb, Cu, Zn, Cd, Mg, Ca, Sr, Ba, B, Al, Y, Cl handeln. Vorzugsweise ist der Katalysator ausgewählt aus der Gruppe mit Fe, Al, Ca, Ni, Mn, Cu, Zn, Sn, C, V, Ti, Cr, B, P, O, Cl und Mischungen daraus. Wie bereits erwähnt können diese katalytisch aktiven Elemente bereits in Silicium als Verunreinigung in einem bestimmten Anteil enthalten sein, beispielsweise in oxidischer oder metallischer Form, als Silicide oder in anderen metallurgischen Phasen, oder als Oxide oder Chloride. Ihr Anteil hängt von der Reinheit des verwendeten Siliciums ab.

Der Katalysator kann beispielsweise in metallischer, legierter und/oder salzartiger Form der Kontaktmasse zugesetzt werden. Dabei kann es sich insbesondere um Chloride und/oder Oxide der katalytisch aktiven Elemente handeln. Bevorzugte Verbindungen sind CuCl, $CuCl_2$, CuP, CuO oder Mischungen daraus. Die Kontaktmasse kann ferner Promotoren enthalten, beispielsweise Zn und/oder $ZnCl_2$ und/oder Sn.

Die elementare Zusammensetzung des eingesetzten Siliciums und der Kontaktmasse kann beispielsweise mittels Röntgenfluoreszenzanalyse erfolgen.

Der Katalysator ist bezogen auf Silicium vorzugsweise in einem Anteil von 0,1 bis 20 Gew.-%, besonders bevorzugt von 0,5 bis 15 Gew.-%, insbesondere von 0,8 bis 10 Gew.-%, insbesondere bevorzugt von 1 bis 5 Gew.-%, vorhanden.

## K3 - Reaktionsbedingungen

Die Kennzahl K3 setzt nach Gleichung 7 die wichtigsten Parameter der HC miteinander in Beziehung. In ihr enthalten sind die Gasleerrohrgeschwindigkeit $u_L$, der Druckverlust über die Wirbelschicht $p_{diff}$, die kinematische Viskosität der Fluids $\nu_F$ und die Fluiddichte $\rho_F$. Unter Fluid ist das gasförmige Reaktionsgemisch im Reaktorinnenraum zu verstehen.

Die Gaslehrrohrgeschwindigkeit $u_L$ beträgt 0,05 bis 2 m/s, bevorzugt 0,1 bis 1 m/s, besonders bevorzugt 0,2 bis 0,8 m/s, insbesondere 0,25 bis 0,6 m/s.

Die Fluiddichte $\rho_F$ und die kinematische Viskosität $\nu_F$ können durch Simulationen von (Phasen-)Gleichgewichtszuständen unter Verwendung einer verfahrenstechnischen Software ermittelt werden. Diese Simulationen basieren üblicherweise auf angepassten Zustandsgleichungen, die sich bei variierenden physikalischen Parametern (z.B. p und T) auf real gemessene Zusammensetzungen des Reaktionsgemisches sowohl in der Gas- als auch in der Flüssigphase stützen. Dieses Simulationsmodell kann anhand realer Betriebszustände/-parameter validiert werden und ermöglicht so die Festlegung von Betriebsoptima hinsichtlich der Parameter $\rho_F$ und $\nu_F$.

Die Bestimmung von Phasengleichgewichten kann beispielsweise mit einer Messapparatur erfolgen (z.B. modifizierte Umlaufapparatur nach Röck und Sieg, bspw. MSK Baraton Typ 690, MSK Instruments). Dabei werden für ein Stoffgemisch durch Variation von physikalischen Einflussgrößen wie Druck und Temperatur Aggregatzustandsänderungen hervorgerufen. Daraufhin werden die verschiedenen Aggregatzustände analysiert und die Komponentenzusammensetzung bestimmt, beispielsweise mit einem Gaschromatograph. Über rechnergestützte Modellierung können Zustandsgleichungen angepasst werden, um die Phasengleichgewichte zu beschreiben. Die Daten werden in verfahrenstechnische Softwareprogramme übertragen, so dass Phasengleichgewichte berechnet werden können.

Die kinematische Viskosität ist ein Maß für die Impulsübertragung quer zur Strömungsrichtung in einem bewegten Fluid. Dabei kann die kinematische Viskosität $\nu_F$ über die dynamische Viskosität und die Fluiddichte beschrieben werden. Die Dichte kann für Flüssigkeiten beispielsweise über die Rackett-Gleichung angenähert werden, für Gase kann eine Annäherung über eine Zustandsgleichung, z.B. Peng-Robinson, erfolgen. Die Messung der Dichte kann mit einem digitalen Dichtemessgerät (z.B. DMA 58, Fa. Anton Paar) unter Verwendung der Biegeschwingermethode (Eigenfrequenzmessung) durchgeführt werden.

Die Fluiddichte $\rho_F$ liegt in einem Bereich von 2 bis 20 kg/m$^3$, bevorzugt von 5 bis 15 kg/m$^3$, besonders bevorzugt von 7,5 bis 12 kg/m$^3$.

Die kinematische Viskosität $\nu_F$ liegt in einem Bereich von $3 \cdot 10^{-7}$ bis $5,4 \cdot 10^{-6}$ m$^2$/s, bevorzugt von $1,5 \cdot 10^{-6}$ bis $5,4 \cdot 10^{-6}$ m$^2$/s, besonders bevorzugt von $2 \cdot 10^{-6}$ bis $4 \cdot 10^{-6}$ m$^2$/s.

Der absolute Druck im Wirbelschichtreaktor, bei welchem das erfindungsgemäße Verfahren vorzugsweise durchgeführt wird, beträgt 0,5 bis 5 MPa, bevorzugt 1 bis 4 MPa, besonders bevorzugt 1,5 bis 3,5 MPa.

Das Verfahren wird vorzugsweise in einem Temperaturbereich von 350 bis 800°C, besonders bevorzugt 400 bis 700°C, insbesondere 480 bis 600°C, durchgeführt.

Vorzugsweise enthält das Reaktionsgas vor Eintritt in den Reaktor mindestens 10 Vol.-%, besonders bevorzugt mindestens 50 Vol.-%, insbesondere mindestens 90 Vol.-%, Wasserstoff und STC.

Ferner können Wasserstoff und STC in einem Molverhältnis von 1:1 bis 10:1, bevorzugt von 1:1 bis 6:1, besonders bevorzugt von 1.1 bis 4:1, vorliegen.

Das Reaktionsgas kann ferner eine oder mehrere Komponenten ausgewählt aus der Gruppe mit $H_nSiCl_{4-n}$ (n = 0 bis 4), $H_mCl_{6-m}Si_2$ (m = 0 bis 6), $H_qCl_{6-q}Si_2O$ (q = 0 bis 4), $CH_4$, $C_2H_6$, CO, $CO_2$, $O_2$, $N_2$ enthalten. Diese Komponenten können beispielsweise aus in einem Verbund zurückgewonnenen Wasserstoff stammen.

Ferner kann dem Reaktionsgas HCl und/oder $Cl_2$ zugesetzt werden, insbesondere um eine exotherme Reaktionsführung zu ermöglichen sowie um die Gleichgewichtslage der Reaktionen zu beeinflussen. Das Reaktionsgas enthält vorzugsweise vor Eintritt in den Reaktor pro Mol enthaltenem Wasserstoff 0,01 bis 1 Mol HCl und/oder 0,01 bis 1 Mol $Cl_2$. HCl kann auch als Verunreinigung in zurückgewonnenem Wasserstoff enthalten sein.

Das Reaktionsgas kann ferner ein Trägergas enthalten, beispielsweise Stickstoff oder ein Edelgas wie Argon.

Die Bestimmung der Zusammensetzung des Reaktionsgases erfolgt üblicherweise vor der Zuleitung zum Reaktor über Raman- und Infrarotspektroskopie sowie Gaschromatographie. Dies kann sowohl über stichprobenartig entnommene Proben und anschließende "offline-Analysen" als auch über in das System eingebundene "online"-Analysengeräte erfolgen.

Das Verfahren ist bevorzugt in einen Verbund zur Herstellung von Polysilicium eingebunden. Der Verbund umfasst vorzugsweise folgende Prozesse: Erzeugung von TCS gemäß dem erfindungsgemäßen Verfahren, Aufreinigung des erzeugten TCS zu TCS mit Halbleiterqualität, Abscheidung von Polysilicium, bevorzugt nach dem Siemens-Verfahren oder als Granulat.

**Beispiele:**

Um die gewonnenen Erkenntnisse und Zusammenhänge auf die Produktivität bei der Herstellung von Chlorsilanen zu übertragen und um die Bereiche für die Kennzahlen K1, K2 und K3 (Arbeitsbereiche) zu definieren, wurden eingehende Untersuchungen an kontinuierlich betriebenen Wirbelschichtreaktoren unterschiedlicher Größe durchgeführt.

Es wurden verschiedene Experimente V durchgeführt (Tabelle 1: V1 bis V31), wobei jeweils der hydraulische Anlagendurchmesser $d_{hyd}$ mit Werten von 0,3 m bis 3 m, die Gasleerrohrgeschwindigkeit $u_L$ mit Werten von 0,01 m/s bis 4 m/s, der Partikel-Sauterdurchmesser $d_{32}$ mit Werten von 5 pm bis 2.500 $\mu$m, die Breite der Arbeitskörnung $B_{AK}$ mit Werten von 10 bis 2.000 $\mu$m die relative Katalysator-Verteilung über die Kontaktmasse $\delta_{rel}$ mit Werten von 0,0001 bis 10, der Reinheitsgrad des Siliciums mit Werten von 0,75 bis 0,99999, die Katalysator-Beladung A mit Werten von 0,00001 bis 0,4 und der Druckverlust über die Wirbelschicht $p_{diff}$ mit Werten von 5.000 bis 400.000 kg/m*s$^2$ variiert wurden.

Grundsätzlich kann die Partikelfeststoffdichte $\rho_P$ näherungsweise als konstant angesehen werden. Die Fluiddichte $\rho_F$ liegt üblicherweise in einem Bereich von 2 bis 20 kg/m$^3$. Die kinematische Viskosität $\nu_F$ liegt üblicherweise in einem Bereich von $6 \cdot 10^{-7}$ bis $4,5 \cdot 10^{-6}$ m$^2$/s.

Aus den gewählten/vorgegebenen Parametern ergaben sich die Kennzahlen K1 (Gleichung 1), K2 (Gleichung 4) und K3 (Gleichung 7). Zur Bewertung der ausgewählten Kombinationen aus K1, K2 und K3 und zur Definition der optimalen Bereiche wurde die Produktivität [kg/(kg*h)], also die produzierte Menge an Chlorsilanen pro Stunde [kg/h], bezogen auf die im Reaktor eingesetzte Menge an Kontaktmasse (Arbeitskörnung) [kg], zu Grunde gelegt. Als optimal bzw. akzeptabel gilt eine Produktivität von > 0,01 kg/(kg*h).

Tabelle 1

| Experiment | K1 | K2 | K3 | Produktivität [kg/(kg*h)] |
|---|---|---|---|---|
| V1 | 1,37 | 2,81 | 155 | < 0,01 |
| V2 | 1,97 | 2,72 | 149 | < 0,01 |
| V3 | 2,94 | 2,93 | 153 | 0,088 |
| V4 | 3,27 | 3,21 | 137 | 0,094 |
| V5 | 4,96 | 3,04 | 144 | 0,169 |
| V6 | 6,76 | 2,61 | 163 | 0,212 |
| V7 | 8,39 | 2,88 | 159 | 0,337 |
| V8 | 8,39 | 0,000006 | 154 | < 0,01 |
| V9 | 8,39 | 0,0006 | 157 | < 0,01 |
| V10 | 8,39 | 0,0011 | 156 | 0,045 |
| V11 | 8,39 | 0,0073 | 156 | 0,079 |
| V12 | 8,39 | 0,014 | 157 | 0,124 |
| V13 | 8,39 | 0,027 | 160 | 0,180 |
| V14 | 8,39 | 14,6 | 184 | 0,407 |
| V15 | 8,39 | 19,2 | 188 | 0,320 |
| V16 | 8,39 | 147 | 179 | 0,115 |
| V17 | 8,39 | 221 | 193 | < 0,01 |
| V18 | 8,39 | 2,87 | 10193 | < 0,01 |
| V19 | 8,39 | 3,01 | 0,45 | < 0,01 |
| V20 | 8,39 | 3,12 | 0,83 | 0,027 |
| V21 | 8,39 | 3,17 | 3,77 | 0,098 |
| V22 | 8,39 | 3,09 | 5,01 | 0,123 |
| V23 | 8,39 | 3,84 | 14,1 | 0,241 |
| V24 | 8,39 | 3,99 | 277 | 0,541 |
| V25 | 8,39 | 3,74 | 608 | 0,184 |

(fortgesetzt)

| Experiment | K1 | K2 | K3 | Produktivität [kg/(kg*h)] |
|---|---|---|---|---|
| V26 | 8,39 | 3,09 | 1058 | 0,133 |
| V27 | 8,39 | 3,02 | 4115 | 0,094 |
| V28 | 8,39 | 3,12 | 7684 | 0,048 |
| V29 | 8,39 | 2,99 | 9056 | 0,025 |
| V30 | 12,1 | 4,22 | 270 | 0,420 |
| V31 | 13,1 | 4,08 | 283 | 0,393 |
| V32 | 16,4 | 3,87 | 288 | 0,228 |
| V33 | 19,7 | 3,74 | 269 | 0,018 |
| V34 | 21,8 | 3,93 | 248 | < 0,01 |

Die Experimente belegen, dass sich mittels NTK besonders produktiv Chlorsilane herstellen lassen, wenn das Verfahren in den optimalen Bereichen der Kennzahlen K1, K2 und K3 durchgeführt wird.

**Patentansprüche**

1. Verfahren zur Herstellung von Chlorsilanen in einem Wirbelschichtreaktor durch Umsetzung von einem Wasserstoff und Siliciumtetrachlorid enthaltenden Reaktionsgas mit einer partikulären Kontaktmasse, enthaltend Silicium und einen Katalysator, wobei die Chlorsilane die allgemeinen Formel $H_nSiCl_{4-n}$ und/oder $H_mCl_{6-m}Si_2$ mit n = 1-4 und m = 0-4 aufweisen, **dadurch gekennzeichnet, dass**

   - das Reaktordesign beschrieben ist durch eine Kennzahl,

$$K1 = \varphi \cdot \frac{V_{Reaktor,eff}}{A_{ges,gekühlt} \cdot d_{hyd}} \quad \text{mit} \qquad \text{(Gleichung 1)}$$

   $\varphi$ = Füllgrad des Reaktors,
   $V_{Reaktor,eff}$ = effektives Reaktorvolumen [m³],
   $A_{ges,gekühlt}$ = Summe gekühlter Oberflächen im Reaktor [m²],
   $d_{hyd}$ = hydraulischer Reaktordurchmesser[m],
   wobei $V_{Reaktor,eff}$ 1 bis 300 m³ und $d_{hyd}$ 0,5 bis 2,5 m beträgt;

   - die Beschaffenheit der Kontaktmasse beschrieben ist durch eine Kennzahl

$$K2 = R_{Si} \cdot \frac{B_{AK} \cdot \delta_{rel}}{d_{32}}, \quad \text{mit} \qquad \text{(Gleichung 4)}$$

   $B_{AK}$ = Breite der Partikelgrößenverteilung der Kontaktmasse [pm],
   $d_{32}$ = Partikel-Sauterdurchmesser [pm],
   $R_{Si}$ = Reinheitsgrad des Siliciums,
   $\delta_{rel}$ = relative Katalysatorverteilung in der Kontaktmasse,
   wobei $\delta_{rel}$ 0,001 bis 7, $d_{32}$ 10 bis 2.000 μm,
   $B_{AK}$ 10 bis 1.500 pm und $R_{Si}$ 0,75 bis 0,99999 beträgt;

   - die Reaktionsbedingungen beschrieben sind durch eine Kennzahl

$$K3 = \frac{u_L}{v_F \cdot 10^6} \cdot \frac{p_{diff}}{g} \cdot \frac{1}{\rho_F}, \quad \text{mit} \qquad \text{(Gleichung 7)}$$

   $u_L$ = Gaslehrrohrgeschwindigkeit [m/s],

$\nu_F$ = kinematische Viskosität des Fluids [m²/s],

$\rho_F$ = Fluiddichte [kg/m³],

$p_{diff}$ = Druckverlust über die Wirbelschicht [kg/m*s²],

$g$ = Erdbeschleunigung [m/s²],

wobei $p_{diff}$ 10.000 bis 200.000 kg/m*s², $u_L$ 0,05 bis 2 m/s, $\rho_F$ 2 bis 20 kg/m³ und $\nu_F$ 3*10⁻⁷ bis 5,4*10⁻⁶ m²/s beträgt;

und wobei K1 einen Wert von 2 bis 20, K2 einen Wert von 0,001 bis 200 und K3 einen Wert von 0,5 bis 10.000 aufweist.

2. Verfahren nach Anspruch 1, **dadurch gekennzeichnet, dass** K1 einen Wert von 3 bis 18, bevorzugt von 4 bis 16, besonders bevorzugt von 6 bis 12, aufweist.

3. Verfahren nach Anspruch 1 oder 2, **dadurch gekennzeichnet, dass** K2 einen Wert von 0,005 bis 100, bevorzugt von 0,01 bis 25, besonders bevorzugt von 0,02 bis 15, aufweist.

4. Verfahren nach einem der vorhergehenden Ansprüche, **dadurch gekennzeichnet, dass** K3 einen Wert von 0,5 bis 10.000, bevorzugt von 3 bis 3.000, besonders bevorzugt von 5 bis 1.000, aufweist.

5. Verfahren nach einem der vorhergehenden Ansprüche, **dadurch gekennzeichnet, dass** das effektive Reaktorvolumen $V_{Reaktor,eff}$ 5 bis 200 m³, bevorzugt 10 bis 150 m³, insbesondere 20 bis 100 m³, beträgt.

6. Verfahren nach einem der vorhergehenden Ansprüche, **dadurch gekennzeichnet, dass** der hydraulische Anlagendurchmesser $d_{hyd}$ 0,75 bis 2 m, bevorzugt 0,8 bis 1,5 m, beträgt.

7. Verfahren nach einem der vorhergehenden Ansprüche, **dadurch gekennzeichnet, dass** der Druckverlust über die Wirbelschicht $p_{diff}$ 30.000 bis 150.000 kg/m*s², bevorzugt 50.000 bis 120.000 kg/m*s², beträgt.

8. Verfahren nach einem der vorhergehenden Ansprüche, **dadurch gekennzeichnet, dass** der Partikel-Sauterdurchmesser $d_{32}$ 50 bis 1.500 $\mu$m, bevorzugt 100 bis 1.000 $\mu$m, insbesondere 200 bis 800 $\mu$m, beträgt.

9. Verfahren nach einem der vorhergehenden Ansprüche, **dadurch gekennzeichnet, dass** die Breite der Partikelgrößenverteilung der Kontaktmasse $B_{AK}$ 100 bis 1.000 $\mu$m, bevorzugt 300 bis 800 $\mu$m, beträgt.

10. Verfahren nach einem der vorhergehenden Ansprüche, **dadurch gekennzeichnet, dass** die relative Katalysatorverteilung in der Kontaktmasse $\delta_{rel}$ 0,005 bis 5, bevorzugt 0,01 bis 2,5, beträgt.

11. Verfahren nach einem der vorhergehenden Ansprüche, **dadurch gekennzeichnet, dass** der Katalysator ausgewählt ist aus der Gruppe mit Fe, Al, Ca, Ni, Mn, Cu, Zn, Sn, C, V, Ti, Cr, B, P, O, Cl und Mischungen daraus.

12. Verfahren nach einem der vorhergehenden Ansprüche, **dadurch gekennzeichnet, dass** die Gaslehrrohrgeschwindigkeit $u_L$ 0,1 bis 1 m/s, bevorzugt 0,2 bis 0,8 m/s, insbesondere 0,25 bis 0,6 m/s, beträgt.

13. Verfahren nach einem der vorhergehenden Ansprüche, **dadurch gekennzeichnet, dass** die Fluiddichte $\rho_F$ 5 bis 15 kg/m³, bevorzugt 7,5 bis 12 kg/m³, beträgt.

14. Verfahren nach einem der vorhergehenden Ansprüche, **dadurch gekennzeichnet, dass** die kinematische Viskosität $\nu_F$ 1,5*10⁻⁶ bis 5,4*10⁻⁶ m²/s, bevorzugt 2*10⁻⁶ bis 4*10⁻⁶ m²/s, beträgt.

15. Verfahren nach einem der vorhergehenden Ansprüche, **dadurch gekennzeichnet, dass** der absolute Druck im Wirbelschichtreaktor 0,5 bis 5 MPa, bevorzugt 1 bis 4 MPa, besonders bevorzugt 1,5 bis 3,5 MPa, beträgt.

16. Verfahren nach einem der vorhergehenden Ansprüche, **dadurch gekennzeichnet, dass** es in einem Temperaturbereich von 350 bis 800°C, bevorzugt 400 bis 700°C, besonders bevorzugt 480 bis 600°C, durchgeführt wird.

17. Verfahren nach einem der vorhergehenden Ansprüche, **dadurch gekennzeichnet, dass** das Reaktionsgas vor Eintritt in den Reaktor mindestens 10 Vol.-%, bevorzugt mindestens 50 Vol.-%, besonders bevorzugt mindestens 90 Vol.-%, Wasserstoff und Siliciumtetrachlorid enthält.

18. Verfahren nach einem der vorhergehenden Ansprüche, **dadurch gekennzeichnet, dass** es in einen Verbund zur Herstellung von polykristallinem Silicium eingebunden ist.

**Claims**

1. Process for producing chlorosilanes in a fluidized bed reactor by reaction of a hydrogen- and silicon tetrachloride-containing reaction gas with a particulate contact mass containing silicon and a catalyst, wherein the chlorosilanes have the general formula $H_nSiCl_{4-n}$ and/or $H_mCl_{6-m}Si_2$ where n = 1-4 and m = 0-4, **characterized in that**

   - the reactor design is described by an index

   $$K1 = \varphi \cdot \frac{V_{reactor,\ eff}}{A_{tot,\ cooled} \cdot d_{hyd}}, \text{ where} \qquad (\text{equation 1})$$

   $\varphi$ = fill level of the reactor,
   $V_{reactor,\ eff}$ = effective volume of the reactor [m$^3$],
   $A_{tot,\ cooled}$ = sum of cooled surface areas in the reactor [m$^2$],
   $d_{hyd}$ = hydraulic reactor diameter [m],
   wherein $V_{reactor,\ eff}$ is 1 to 300 m$^3$ and $d_{hyd}$ is 0.5 to 2.5 m;

   - the constitution of the contact mass is described by an index

   $$K2 = R_{Si} \cdot \frac{B_{AK} \cdot \delta_{rel}}{d_{32}}, \text{ where} \qquad (\text{equation 4})$$

   $B_{AK}$ = breadth of the particle size distribution of the contact mass [pm],
   $d_{32}$ = particle Sauter diameter [$\mu$m],
   $R_{Si}$ = purity of the silicon,
   $\delta_{rel}$ = relative catalyst distribution in the contact mass,
   wherein $\delta_{rel}$ is 0.001 to 7, $d_{32}$ is 10 to 2000 $\mu$m, $B_{AK}$ is 10 to 1500 $\mu$m and $R_{Si}$ is 0.75 to 0.99999;

   - the reaction conditions are described by an index

   $$K3 = \frac{u_L}{v_F \cdot 10^6} \cdot \frac{p_{diff}}{g} \cdot \frac{1}{\rho_F}, \text{ where} \qquad (\text{equation 7})$$

   $u_L$ = superficial gas velocity [m/s],
   $v_F$ = kinematic viscosity of the fluid [m$^2$/s],
   $\rho_F$ = fluid density [kg/m$^3$],
   $p_{diff}$ = pressure drop over the fluidized bed [kg/m*s$^2$],
   $g$ = acceleration due to gravity [m/s$^2$],
   wherein $p_{diff}$ is 10 000 to 200 000 kg/m*s$^2$, $u_L$ is 0.05 to 2 m/s, $\rho_F$ is 2 to 20 kg/m$^3$ and $v_F$ is 3*10$^{-7}$ to 5.4*10$^{-6}$ m$^2$/s;

   and wherein K1 has a value of 2 to 20, K2 has a value of 0.001 to 200 and K3 has a value of 0.5 to 10 000.

2. Process according to Claim 1, **characterized in that** K1 has a value of 3 to 18, preferably of 4 to 16, particularly preferably of 6 to 12.

3. Process according to Claim 1 or 2, **characterized in that** K2 has a value of 0.005 to 100, preferably of 0.01 to 25, particularly preferably of 0.02 to 15.

4. Process according to any of the preceding claims, **characterized in that** K3 has a value of 0.5 to 10 000, preferably of 3 to 3000, particularly preferably of 5 to 1000.

5. Process according to any of the preceding claims, **characterized in that** the effective reactor volume $V_{Reactor, eff}$ is 5 to 200 m$^3$, preferably 10 to 150 m$^3$, in particular 20 to 100 m$^3$.

6. Process according to any of the preceding claims, **characterized in that** the hydraulic plant diameter $d_{hyd}$ is 0.75 to 2 m, preferably 0.8 to 1.5 m.

7. Process according to any of the preceding claims, **characterized in that** the pressure drop over the fluidized bed $p_{diff}$ is 30 000 to 150 000 kg/m*s$^2$, preferably 50 000 to 120 000 kg/m*s$^2$.

8. Process according to any of the preceding claims, **characterized in that** the particle Sauter diameter $d_{32}$ is 50 to 1500 $\mu$m, preferably 100 to 1000 $\mu$m, in particular 200 to 800 $\mu$m.

9. Process according to any of the preceding claims, **characterized in that** the breadth of the particle size distribution of the contact mass $B_{AK}$ is 100 to 1000 $\mu$m, preferably 300 to 800 pm.

10. Process according to any of the preceding claims, **characterized in that** the relative catalyst distribution in the contact mass $\delta_{rel}$ is 0.005 to 5, preferably 0.01 to 2.5.

11. Process according to any of the preceding claims, **characterized in that** the catalyst is selected from the group comprising Fe, Al, Ca, Ni, Mn, Cu, Zn, Sn, C, V, Ti, Cr, B, P, O, Cl and mixtures thereof.

12. Process according to any of the preceding claims, **characterized in that** the superficial gas velocity $u_L$ is 0.1 to 1 m/s, preferably 0.2 to 0.8 m/s, in particular 0.25 to 0.6 m/s.

13. Process according to any of the preceding claims, **characterized in that** the fluid density $\rho_F$ is 5 to 15 kg/m$^3$, preferably 7.5 to 12 kg/m$^3$.

14. Process according to any of the preceding claims, **characterized in that** the kinematic viscosity $v_F$ is 1.5*10$^{-6}$ m$^2$/s to 5.4*10$^{-6}$ m$^2$/s, preferably 2*10$^{-6}$ m$^2$/s to 4*10$^{-6}$ m$^2$/s.

15. Process according to any of the preceding claims, **characterized in that** the absolute pressure in the fluidized bed reactor is 0.5 to 5 MPa, preferably 1 to 4 MPa, particularly preferably 1.5 to 3.5 MPa.

16. Process according to any of the preceding claims, **characterized in that** it is performed in a temperature range of 350°C to 800°C, preferably 400°C to 700°C, particularly preferably 480°C to 600°C.

17. Process according to any of the preceding claims, **characterized in that** before entry into the reactor the reaction gas contains at least 10% by volume, preferably at least 50% by volume, particularly preferably at least 90% volume, of hydrogen and silicon tetrachloride.

18. Process according to any of the preceding claims, **characterized in that** it is integrated into an integrated system for production of polycrystalline silicon.


**Revendications**

1. Procédé de fabrication de chlorosilanes dans un réacteur à lit fluidisé par réaction d'un gaz réactionnel contenant de l'hydrogène et du tétrachlorure de silicium avec une masse de contact particulaire contenant du silicium et un catalyseur, les chlorosilanes ayant la formule générale $H_nSiCl_{4-n}$ et/ou $H_mCl_{6-m}Si_2$ avec n = 1-4 et m = 0-4, **caractérisé en ce que**

   - la conception du réacteur est décrite par un indicateur,

$$K1 = \varphi \cdot \frac{V_{Réacteur,eff}}{A_{tot,refroidi} \cdot d_{hyd}}$$     (Équation 1)

   dans laquelle

$\varphi$ = taux de remplissage du réacteur,

$V_{Réacteur,eff}$ = volume efficace du réacteur [m$^3$],

$A_{tot,refroidi}$ = somme des aires refroidies dans le réacteur [m$^2$],

$d_{hyd}$ = diamètre hydraulique du réacteur [m], $V_{Réacteur,eff}$ étant de 1 à 300 m$^3$ et $d_{hyd}$ étant de 0,5 à 2,5 m ;

- la nature de la masse de contact est déterminée par un indicateur

$$K2 = R_{Si} \cdot \frac{B_{AK} \cdot \delta_{rel}}{d_{32}}, \qquad (\text{Équation } 4)$$

dans lequel

$B_{AK}$ = largeur de la distribution granulométrique de la masse de contact [pm],

$d_{32}$ = diamètre de Sauter des particules [pm],

$R_{Si}$ = degré de pureté du silicium,

$\delta_{rel}$ = distribution relative du catalyseur dans la masse de contact,

$\delta_{rel}$ étant de 0,001 à 7, $d_{32}$ étant de 10 à 2 000 $\mu$m, $B_{AK}$ étant de 10 à 1 500 pm et $R_{Si}$ étant de 0,75 à 0,99999 ;

- les conditions de la réaction sont décrites par un indicateur

$$K3 = \frac{u_L}{v_F \cdot 10^6} \cdot \frac{p_{diff}}{g} \cdot \frac{1}{\rho_F}, \qquad (\text{Équation } 7)$$

dans lequel

$u_L$ = vitesse du gaz dans le tube vide [m/s],

$v_F$ = viscosité cinématique du fluide [m$^2$/s],

$\rho_F$ = masse volumique du fluide [kg/m$^3$],

$p_{diff}$ = perte de charge sur le lit fluidisé [kg/m*s$^2$],

$g$ = accélération de la pesanteur [m/s$^2$],

$p_{diff}$ étant de 10 000 à 200 000 kg/m*s$^2$, $u_L$ étant de 0,05 à 2 m/s, $\rho_F$ étant de 2 à 20 kg/m$^3$ et $v_F$ étant de 3*10$^{-7}$ à 5,4*10$^{-6}$ m$^2$/s ;

K1 ayant une valeur de 2 à 20, K2 une valeur de 0,001 à 200 et K3 une valeur de 0,5 à 10 000.

2. Procédé selon la revendication 1, **caractérisé en ce que** K1 a une valeur de 3 à 18, de préférence de 4 à 16, d'une manière particulièrement préférée de 6 à 12.

3. Procédé selon la revendication 1 ou 2, **caractérisé en ce que** K2 a une valeur de 0,005 à 100, de préférence de 0,01 à 25, d'une manière particulièrement préférée de 0,02 à 15.

4. Procédé selon l'une des revendications précédentes, **caractérisé en ce que** K3 a une valeur de 0,5 à 10 000, de préférence de 3 à 3 000, d'une manière particulièrement préférée de 5 à 1 000.

5. Procédé selon l'une des revendications précédentes, **caractérisé en ce que** le volume efficace du réacteur $V_{Réacteur,eff}$ est de 5 à 200 m$^3$, de préférence de 10 à 150 m$^3$, en particulier de 20 à 100 m$^3$.

6. Procédé selon l'une des revendications précédentes, **caractérisé en ce que** le diamètre hydraulique de l'installation $d_{hyd}$ est de 0,75 à 2 m, de préférence de 0,8 à 1,5 m.

7. Procédé selon l'une des revendications précédentes, **caractérisé en ce que** la perte de charge sur le lit fluidisé $p_{diff}$ est de 30 000 à 150 000 kg/m*s$^2$, de préférence de 50 000 à 120 000 kg/m*s$^2$.

8. Procédé selon l'une des revendications précédentes, **caractérisé en ce que** le diamètre Sauter des particules $d_{32}$ est de 50 à 1 500 $\mu$m, de préférence de 100 à 1 000 $\mu$m, en particulier de 200 à 800 pm.

9. Procédé selon l'une des revendications précédentes, **caractérisé en ce que** la largeur de la distribution granulométrique de la masse de contact $B_{AK}$ est de 100 à 1 000 $\mu$m, de préférence de 300 à 800 pm.

10. Procédé selon l'une des revendications précédentes, **caractérisé en ce que** la distribution relative du catalyseur dans la masse de contact $\delta_{rel}$ est de 0,005 à 5, de préférence de 0,01 à 2,5.

11. Procédé selon l'une des revendications précédentes, **caractérisé en ce que** le catalyseur est choisi dans le groupe Fe, Al, Ca, Ni, Mn, Cu, Zn, Sn, C, V, Ti, Cr, B, P, O, Cl et les mélanges de ceux-ci.

12. Procédé selon l'une des revendications précédentes, **caractérisé en ce que** la vitesse du gaz dans le tube vide $u_L$ est de 0,1 à 1 m/s, de préférence de 0,2 à 0,8 m/s, en particulier de 0,25 à 0,6 m/s.

13. Procédé selon l'une des revendications précédentes, **caractérisé en ce que** la masse volumique du fluide $\rho_F$ est de 5 à 15 kg/m$^3$, de préférence de 7,5 à 12 kg/m$^3$.

14. Procédé selon l'une des revendications précédentes, **caractérisé en ce que** la viscosité cinématique $\nu_F$ est de 1,5*10$^{-6}$ à 5,4*10$^{-6}$ m$^2$/s, de préférence de 2*10$^{-6}$ à 4*10$^{-6}$ m$^2$/s.

15. Procédé selon l'une des revendications précédentes, **caractérisé en ce que** la pression absolue dans le réacteur à lit fluidisé est de 0,5 à 5 MPa, de préférence de 1 à 4 MPa, d'une manière particulièrement préférée de 1,5 à 3,5 MPa.

16. Procédé selon l'une des revendications précédentes, **caractérisé en ce qu'**il est mis en œuvre dans une plage de températures de 350 à 800 °C, de préférence de 400 à 700 °C, d'une manière particulièrement préférée de 480 à 600 °C.

17. Procédé selon l'une des revendications précédentes, **caractérisé en ce que** le gaz réactionnel contient avant d'entrer dans le réacteur au moins 10 % en volume, de préférence au moins 50 % en volume, d'une manière particulièrement préférée au moins 90 % en volume d'hydrogène et de tétrachlorure de silicium.

18. Procédé selon l'une des revendications précédentes, **caractérisé en ce qu'**il est intégré dans un système combiné de fabrication de silicium polycristallin.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010028878 A1
- WO 2016198264 A1
- WO 0248024 A2
- DE 3938897
- DE 102008041974 A1
- DE 19740923 A1
- US 20110129402 A1

**In der Beschreibung aufgeführte Nicht-Patentliteratur**

- **W.-D. HERGETH.** On-Line Monitoring of Chemical Reactions: Ullmann's Encyclopedia of Industrial Chemistry. Wiley, 2006